# EUROPEAN PATENT APPLICATION

(11) **EP 4 517 506 A1**
(43) Date of publication of application: **05.03.2025**
(21) Application number: 24167148.6
(22) Date of filing: 28.03.2024
(51) Int. Cl.: G06F 3/06

(54) **MEMORY CONTROLLER WITH IMPROVED USER FAIRNESS, STORAGE DEVICE INCLUDING THE MEMORY CONTROLLER, AND OPERATING METHOD OF MEMORY CONTROLLER**

(30) Priority: 29.08.2023 KR 20230113743
(71) Applicant: Samsung Electronics Co., Ltd., Suwon-si, Gyeonggi-do 16677 (KR)
(72) Inventor: KWON, Seongnam, 16677 Suwon-si (KR)
(74) Representative: Marks & Clerk LLP

(57) **Abstract**

A memory controller with improved user fairness, a storage device including the memory controller, and an operating method of the memory controller are provided. A memory controller includes a command-unit workload calculator configured to calculate a workload by a unit of each command, based on resource consumption of a memory device, which is determined by performing at least one memory operation included in each of the commands, a user-unit workload calculator configured to calculate a workload caused by each of a plurality of users, based on the workload calculated by the unit of the command, and a command fetch unit configured to preferentially fetch, from a host, a command issued by a user who has caused a relatively small workload, based on calculation results of workloads of the plurality of users.

## Description

### BACKGROUND

The inventive concepts relate to memory controllers, and more particularly, to memory controllers with improved user fairness, storage devices including the memory controller, and operating methods of the memory controller.

There is a solid-state drive (SSD) as an example of a storage device that is based on a flash memory device. Interfaces used for the storage device, such as an SSD, may include serial advanced technology attachment (SATA), peripheral component interconnect express (PCIe), a serial attached small computer system interface (SCSI) (SAS), and a compute express link (CXL). Also, an interface based on a PCIe bus, such as a non-volatile memory express (NVMe), has been proposed.

A storage device may be shared by at least two hosts. Also, each of the hosts may run a plurality of virtual machines (VMs), and thus, a plurality of users may access the storage device through the VMs of each of the hosts. In this case, the plurality of users that access the storage device need to fairly share the storage device, but there are limits to ensuring fairness for the plurality of users.

### SUMMARY

The inventive concepts provide memory controllers, which may accurately determine a workload of each of a plurality of users and control a command (CMD) fetch scheduling operation using the determined workload so that the plurality of users may share a storage device with improved fairness, the storage device including the memory controller, and operating methods of the memory controller.

According to some aspects of the inventive concepts, there is provided a memory controller including a command-unit workload calculator configured to calculate a workload by a unit of each command, based on resource consumption of a memory device, which is determined by performing at least one memory operation included in each of the commands, a user-unit workload calculator configured to calculate a workload caused by each of a plurality of users, based on the workload calculated by the unit of the command, and a command fetch unit configured to preferentially fetch, from a host, a command issued by a user who has caused a relatively small workload, based on calculation results of workloads of the plurality of users.

According to some aspects of the inventive concepts, there is provided an operating method of a memory controller. The method includes performing at least one memory operation included in a first command, which is issued by a first user and fetched from a host, calculating a command-unit workload caused by the first command, based on resource consumption of a memory device, which is determined by performing each of the at least one memory operation, calculating a user-unit workload of the first user by summing the command-unit workload caused by the first command to a current workload of the first user, and preferentially fetching a command issued by a second user before a command issued by the first user when a workload of the first user is greater than a workload of the second user, based on a result of comparison of the workload of the first user with the workload of the second user.

According to some aspects of the inventive concepts, there is provided a storage device including a memory device including at least one memory chip, and a memory controller configured to communicate with a host and control the memory device in response to commands from a plurality of users, wherein the memory controller includes a command-unit workload calculator configured to calculate a workload by a unit of each command, based on resource consumption of the memory device, which is determined in at least one memory operation included in each of the commands, a user-unit workload calculator configured to calculate a workload caused by each of the plurality of users, based on the workload calculated by the unit of the command, and a command fetch unit configured to preferentially fetch, from the host, a command issued by a user who has caused a relatively small workload, based on calculation results of workloads of the plurality of users.

According to some aspects of the inventive concepts, there is provided a memory controller including a command-unit workload calculator configured to calculate a workload by a unit of each command, based on resource consumption of a memory device, which is determined by performing at least one memory operation included in each of the commands, a user-unit workload calculator configured to calculate a workload caused by each of a plurality of users, based on the workload calculated by the unit of the command, and a command fetch unit configured to preferentially fetch, from a host, a command issued by a user who has caused a workload that is smaller than the workload caused by one or more of the others of the plurality of users, based on calculation results of workloads of the plurality of users.

The user-unit workload calculator may be configured to calculate a workload caused by each of the plurality of users, based on the workload calculated by the unit of the command, and aggregated over a plurality of commands issued by respective users.

At least some of the above and other features of the invention are set out in the claims.

### BRIEF DESCRIPTION OF THE DRAWINGS

Example embodiments of the inventive concepts will be more clearly understood from the following detailed description taken in conjunction with the accompanying drawings in which:
FIG. 1 is a block diagram of a data processing system including a storage device, according to some example embodiments;
FIG. 2 is a block diagram of a storage device according to some example embodiments;
FIG. 3 is a block diagram of a memory controller according to some example embodiments;
FIG. 4 is a block diagram of a data processing system according to some example embodiments;
FIGS. 5 to 7 are flowcharts of an operating method of a storage device according to some example embodiments;
FIGS. 8A to 12 are diagrams of methods of monitoring workloads, according to some example embodiments;
FIGS. 13 and 14 illustrate an example of dynamically changing a weight value set for a plurality of factors in calculating a workload;
FIG. 15 illustrates an example of calculating a workload by a unit of a NAND operation, according to some example embodiments;
FIGS. 16A and 16B illustrate an example of calculating a workload according to some example embodiments;
FIG. 17 is a perspective view of a memory block included in a non-volatile memory according to some example embodiments; and
FIG. 18 is a block diagram of an example of applying a storage device to a solid-state drive (SSD) in a data processing system according to some example embodiments.

### DETAILED DESCRIPTION

Hereinafter, example embodiments will be described in detail with reference to the accompanying drawings.

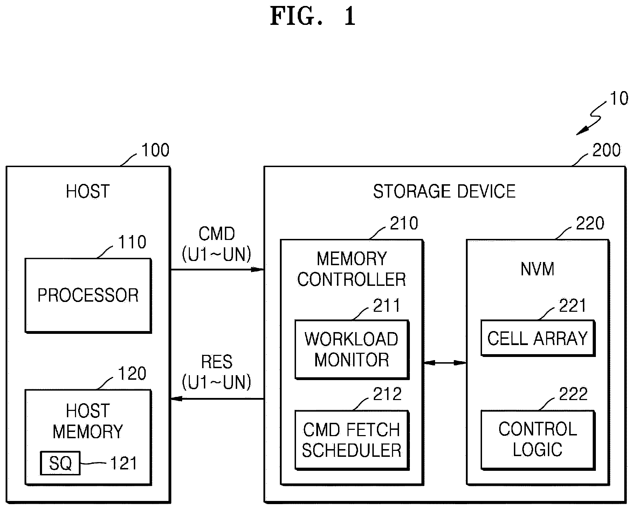

FIG. 1 is a block diagram of a data processing system 10 including a storage device 200, according to some example embodiments.

Referring to FIG. 1, the data processing system 10 may include a host 100 and the storage device 200. The storage device 200 may include a non-volatile memory (NVM) 220 as a memory device and further include a memory controller 210 configured to control the NVM 220. A plurality of users U1 to UN, which share the storage device 200, may provide requests (or commands) instructing the writing and reading of data to the storage device 200 through the host 100. Although only one host 100 is illustrated in FIG. 1, the storage device 200 may be shared by at least two hosts.

In some example embodiments, the storage device 200 may be a concept including a memory device (for example, the NVM 220) and a memory controller (for example, the memory controller 210) configured to control the memory device. The memory controller 210 and the NVM 220 may be separate semiconductor chips. According to some example embodiments, components of the inventive concepts may be defined as various other terms. For example, the storage device 200 may be referred to a memory system or a storage system, and the memory controller 210 may be referred to as a storage controller.

The storage device 200 may include storage media configured to store data upon a request from the host 100. As an example, the storage device 200 may include at least one solid state drive (SSD). When the storage device 200 includes at least one SSD, the NVM 220 may include a plurality of flash memory chips (e.g., NAND chips) configured to store data in a non-volatile manner.

As another example, the storage device 200 may include various types of memories. For example, the storage device 200 may include an NVM, such as magnetic random access memory (MRAM), spin-transfer torque MRAM, conductive bridging RAM (CBRAM), ferroelectric RAM (FeRAM), phase-change RAM (PRAM), resistive RAM (RRAM), nanotube RAM, polymer RAM (PoRAM), nano floating gate memory (NFGM), a holographic memory, a molecular electronics memory, or an insulator resistance change memory.

The storage device 200 may communicate with the host 100 via various interfaces. For example, the storage device 200 may communicate with the host 100 through various interfaces, such as a universal serial bus (USB), a multimedia card (MMC), peripheral component interconnect-express (PCIe), advanced technology attachment (ATA), serial-ATA (SATA), parallel-ATA (PATA), a small computer system interface (SCSI), a serial-attached SCSI (SAS), an enhanced small device interface (ESDI), an intelligent drive electronics (IDE), a compute express link (CXI), and NVM-express (NVMe).

According to some example embodiments, the host 100 may include a processor 110 and a host memory 120. The processor 110 may control all operations of the host 100 by executing software stored in the host memory 120. In some example embodiments, when an NVMe interface is applied to the data processing system 10, the host 100 may encode or decode a packet that satisfies standards defined in the NVMe interface. The host 100 may store a packet instructing writing or reading in the host memory 120 and may store a response RES provided from the storage device 200 in the host memory 120. In some example embodiments, a packet provided by the host 100 to the storage device 200 may be referred to as a request or a command CMD.

In some example embodiments, the memory controller 210 may include a workload monitor 211 and a CMD fetch scheduler 212. Also, the NVM 220 may include at least one NAND chip, and each of the at least one NAND chip may include a cell array 221 and a control logic 222. As an example, the control logic 222 of each of the NAND chips may perform write, read, and erase operations via the control of the memory controller 210, and the cell array 221 may include at least one memory block.

In some example embodiments, the host 100 may provide commands CMD issued by a plurality of users U1 to UN to the storage device 200, and the storage device 200 may provide responses RES to the commands CMD to the plurality of users U1 to UN. For example, the host 100 may generate a plurality of virtual machines (VMs) based on a virtualization technique, and the plurality of VMs may be assigned to the plurality of users U1 to UN. As an example, any one VM may be assigned to each of the plurality of users U1 to UN, and each of the plurality of users U1 to UN may provide the command CMD to the storage device 200 via the assigned VM.

Because the storage device 200 is shared by the plurality of users U1 to UN, a command queue may be assigned to each of the users U1 to UN, and the command CMD issued by each of the users U1 to UN may be stored in the command queue assigned to the user corresponding thereto. As an example, a command queue may correspond to a submission queue (SQ) defined by the NVMe interface. For example, SQs assigned to the plurality of users U1 to UN may be included in the host memory 120 (refer to an SQ 121) or included in another memory outside the host memory 120. The storage device 200 may fetch commands CMD stored in the SQs and perform memory operations (e.g., data write and read operations) by executing the commands CMD. Also, because information about the SQ is included in the command CMD and different SQs are assigned to respective users, the storage device 200 may determine a user who has provided the command CMD, based on the information included in the command CMD. In some example embodiments, user information (e.g., a user ID) may be included in the command CMD instead of the information about the SQ, and the storage device 200 may determine a user who issued the command CMD by checking the user ID included in the command CMD.

According to some example embodiments, when the storage device 200 is shared by the plurality of users U1 to UN, the storage device 200 may perform an internal control operation to improve fairness between users. As an example, the workload monitor 211 may monitor a degree of a workload caused to the storage device 200 by a user unit and provide the monitoring result to the CMD fetch scheduler 212. In addition, when the commands CMD are fetched from the host 100, the CMD fetch scheduler 212 may perform a workload-based CMD fetch scheduling operation to improve fairness for the plurality of users U1 to UN. For example, the CMD fetch scheduler 212 may give priority to a user who has caused a relatively small workload to the storage device 200. For example, the user with the relatively small workload may be a user with the lowest workload, the lowest workload of users issuing requests at a time, a user with a workload in the lowest, 1%, 5%, 10%, etc., of users. However, the example embodiments are not limited thereto. Thus, the CMD fetch scheduler 212 may perform a CMD fetch scheduling operation such that a command CMD from the user who has caused the small workload is fetched first.

According to some example embodiments, the workload monitor 211 may perform an operation of calculating a CMD-unit workload and an operation of calculating a user-unit workload. For example, the workload monitor 211 may perform the operations of calculating the CMD-unit workload and the user-unit workload in a software manner, a hardware manner, or a combination thereof. As an example, an operation of calculating a workload caused by each command may include determining values of at least one factor that affects the performance of the storage device 200 and performing a calculation operation using the values of the at least one factor. The operation of calculating the user-unit workload may include summing workloads calculated for at least one command issued by each of the users U1 to UN or performing a calculation operation using the workloads calculated for the at least one command.

When any one command is processed, the command may include at least one memory operation (hereinafter, NAND operation) of accessing an actual NAND chip, and resources of the storage device 200 may be consumed during each NAND operation. Accordingly, the CMD-unit workload may be calculated as a value corresponding to the resource consumption caused by at least one NAND operation included in the command. That is, in some example embodiments, the calculation of a workload of any one user may not include predicting the workload based on a type and/or a size of a command, but include calculating a workload of the command, based on the resource consumption of each NAND operation included in the command. Thus, a workload actually caused by the user may be accurately calculated, and a CMD fetch scheduling operation may be performed based on the calculated result of the workload. Therefore, user fairness may improve in a multi-user environment in which the storage device 200 is shared by a plurality of users.

As an example, even when commands of the same type and size are executed, workloads of the commands may be differently calculated depending on NAND operations performed in response to the commands. For example, when a cell area at a specific location is intensively read by a specific user, data in other cell areas adjacent to the cell area may deteriorate. In this case, recovery code, such as read reclaim, may be executed, and thus, the resulting workload may increase, for example, the workload may increase at a large or great degree more than the specific command based on additional considerations. Alternatively, when a specific user writes data in a random pattern, garbage collection of the storage device 200 may occur. In this case, a workload caused by the garbage collection may increase, for example, the workload may increase at a large or great degree more than the specific command based on additional considerations. According to some example embodiments, actual workloads caused by the NAND operations may be accurately determined, and the CMD fetch scheduling operation may be performed based on the actual workloads, thereby improving user fairness.

According to some example embodiments, depending on the workload actually caused by the user, higher priority may be given to a user who has caused a relatively small workload, and a command issued by the user with high priority may be preferentially fetched (for example, fetched before users of lower priority). For example, as the number of cases where the storage device 200 is mounted on cloud systems increases, the demand for fairness continues to increase in a multi-user environment. According to some example embodiments, the above-described demand for fairness may be effectively met.

Moreover, various factors that increase a workload of the storage device 200 may be defined. For example, various factors, such as time required for a NAND operation, power required for the NAND operation, a reduction in the lifespan of the storage device 200 caused by the NAND operation, and times taken for the memory controller 210 to occupy various components included in the storage device 200 (for example, times taken for the memory controller 210 to occupy software or hardware and a buffer (not shown) to perform the NAND operation). That is, not only internal components of the NVM 220 but also external components of the NVM 220 may affect the workload of the storage device 200 and be used to calculate the workload of the storage device 200. For example, according to some example embodiments, there may be an increase in speed, accuracy, and/or power efficiency of communication and operation of the device based on the above methods. Therefore, the improved devices and methods overcome the deficiencies of the conventional devices and methods of memory devices related to including usage of multiple memory devices while reducing resource consumption, data accuracy, and increasing data clarity. Further, there is an improvement in communication control and reliability between different users/hosts sharing storage devices by providing the abilities disclosed above.

Moreover, in embodiments, it is assumed that a resource value indicating a degree of resource consumption is calculated for each NAND operation, and a workload of each command is calculated as the sum of resource values calculated for at least one NAND operation. As an example, time and power required for each NAND operation may be defined as factors related to resource consumption, and a resource value indicating a degree of resource consumption to the required time and the required power may be calculated. Also, the user-unit workload may be calculated through operations (e.g., a summation operation and a formula operation) using the workload calculated for at least one command issued by the user. However, the inventive concepts are not limited thereto, and workloads according to some example embodiments may be calculated through various operations on various factors that affect the storage device 200.

In addition, some example embodiments pertain to examples in which a resource value is calculated for each NAND operation to calculate the workload, but example embodiments are not limited thereto. For example, in some example embodiments, a value calculated using various factors in a NAND operation may correspond to a NAND-operation-unit workload, and the CMD-unit workload may be calculated by adding up workloads of at least two NAND operations.

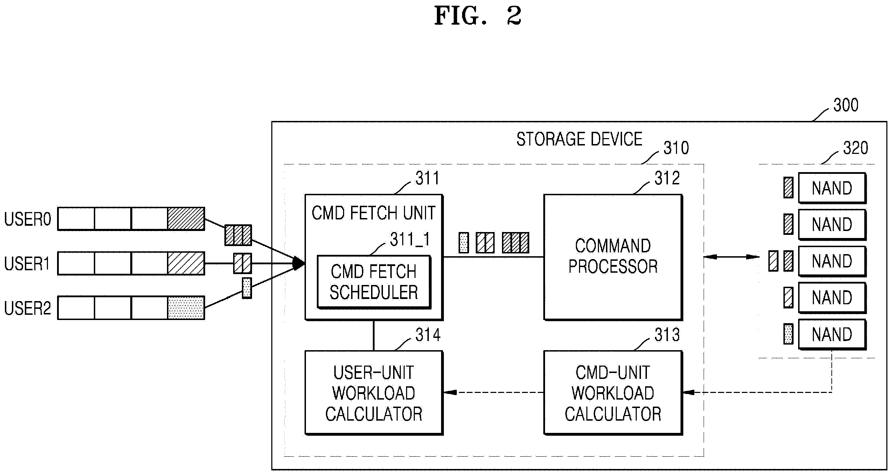

FIG. 2 is a block diagram of a storage device 300 according to some example embodiments. FIG. 2 illustrates an example in which the storage device 300 includes a memory controller 310 and an NVM 320, and the NVM 320 includes a plurality of NAND chips. According to some example embodiments, the memory controller 310 may include a command fetch unit 311 configured to fetch a command, a command processor 312 configured to execute the command, and a CMD-unit workload calculator 313 and a user-unit workload calculator 314, which are configured to monitor a workload. In addition, the memory controller 310 may further include a processor configured to control all operations of the memory controller 310, a memory configured to store various pieces of software, and an interface circuit configured to communicate with the outside.

Referring to FIG. 2, each of a plurality of users (e.g., first to third users UserO to User2) may provide at least one command to the storage device 300, and the command fetch unit 311 may fetch commands from SQs (not shown) assigned to the first to third users UserO to User2. The command fetch unit 311 may include a CMD fetch scheduler 311_1. According to some example embodiments, the CMD fetch scheduler 311_1 may determine the priority for a fetch of the commands provided by the first to third users UserO to User2, based on the monitored workload. The CMD fetch scheduler 311_1 may be referred to as a command fetch arbiter.

The CMD-unit workload calculator 313 may calculate a resource value due to at least one NAND operation included in each command and calculate a workload caused by each command, based on the resource value. Also, the CMD-unit workload calculator 313 may provide the workload, which is calculated for each command, to the user-unit workload calculator 314. As an example, NAND operations may cause different workloads on the storage device 300 according to a type thereof. The CMD-unit workload calculator 313 may calculate a CMD-unit workload based on a resource value calculated by the unit of a NAND operation. Also, each command may include a command ID, and the CMD-unit workload calculator 313 may determine which command each NAND operation belongs to with reference to the command ID.

Moreover, the user-unit workload calculator 314 may calculate a user-unit workload by summing or accumulating workloads caused by commands of respective users. For example, a command issued by a user may include information about an SQ assigned to the user or user ID information, and the user-unit workload calculator 314 may calculate each user-unit workload based on the workload of at least one command issued by each of the users. The CMD fetch scheduler 311_1 may control a command fetch operation based on the workload calculation result from the user-unit workload calculator 314. For example, when a second user User1 causes a greater workload on the storage device 300 than a first user UserO, the CMD fetch scheduler 311_1 may schedule the command fetch operation such that a command is fetched first from an SQ assigned to the first user UserO.

The CMD fetch scheduling operation may be performed in various manners. For example, when NAND operations of any one command are completed, a fetch of the next command may be scheduled based on a workload of the command. Alternatively, a workload for each user may be calculated according to a group defined by a predetermined (or, alternatively, desired or selected) number of commands, and a fetch of the next group of commands may be scheduled based on a workload of the group. In another case, workloads caused by the first to third users UserO to User2 may be continuously accumulated, and a fetch of commands may be scheduled based on the accumulated workload. For example, when a workload of the second user User1 is greater than a workload of the first user UserO, priority may be applied to the first user UserO. However, when the workload of the first user UserO becomes greater than the workload of the second user User1 at a specific point in time due to the accumulation of the workloads, the CMD fetch scheduling operation may be performed such that priority is applied to the second user User1.

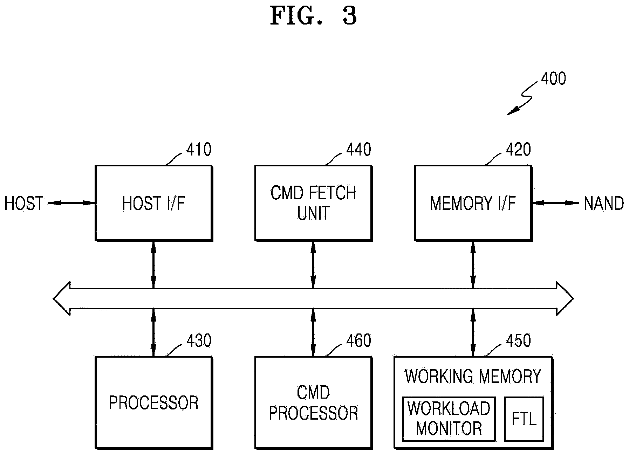

FIG. 3 is a block diagram of a memory controller 400 according to some example embodiments.

Referring to FIG. 3, the memory controller 400 may include a host interface circuit (or host I/F) 410, a memory interface circuit (or memory I/F) 420, a processor 430, a CMD fetch unit 440, a working memory 450, and a CMD processor 460. In some example embodiments, the working memory 450 may be loaded with various types of pieces of software executable by the processor 430. As an example, when an NVM includes a flash memory device, a flash translation layer (FTL) may be loaded in the working memory 450. In some example embodiments, when a workload calculation function is implemented in software, a workload monitoring module including at least one piece of software may be loaded in the working memory 450. The working memory 450 may be implemented in various types, such as random access memory (RAM), read-only memory (ROM), electronically erasable programmable read-only memory (EEPROM), flash memory, or another memory technique.

The processor 430 may control all operations of the memory controller 400 by executing various pieces of software stored in the working memory 450. The host interface circuit 410 may communicate with a host according to a predetermined (or, alternatively, desired or selected) interface. As an example, the memory controller 400 may be connected to the host through a PCIe bus and communicate with the host according to an NVMe interface. The memory interface circuit 420 may provide an interface with the at least one NAND chip included in the NVM. As an example, the memory interface circuit 420 may perform independent communication with the NAND chips through a plurality of channels.

The CMD fetch unit 440 may perform a CMD fetch scheduling operation according to some example embodiments and fetch commands stored in SQs of the host through the host interface circuit 410. For example, commands issued by a plurality of users may be stored in the SQs, and the CMD fetch unit 440 may apply priority to each user to the fetch of the command, based on calculation results of workloads, according to the some example embodiments. Moreover, the CMD processor 460 may control an operation of accessing the NVM based on at least one NAND operation included in each command. As an example, the commands may be executed in the order of the commands fetched by the CMD fetch unit 440.

According to some example embodiments, the workload monitoring module may include at least one piece of software to calculate a CMD-unit workload and a user-unit workload. Some of the example embodiments shown in FIG. 3 pertain to examples in which the workload monitoring module is loaded in the working memory 450 because the operations of calculating the CMD-unit workload and the user-unit workload are implemented in software, but example embodiments are not limited thereto. As an example, at least some of the operations of calculating the workloads for each command and user may be performed by a hardware circuit.

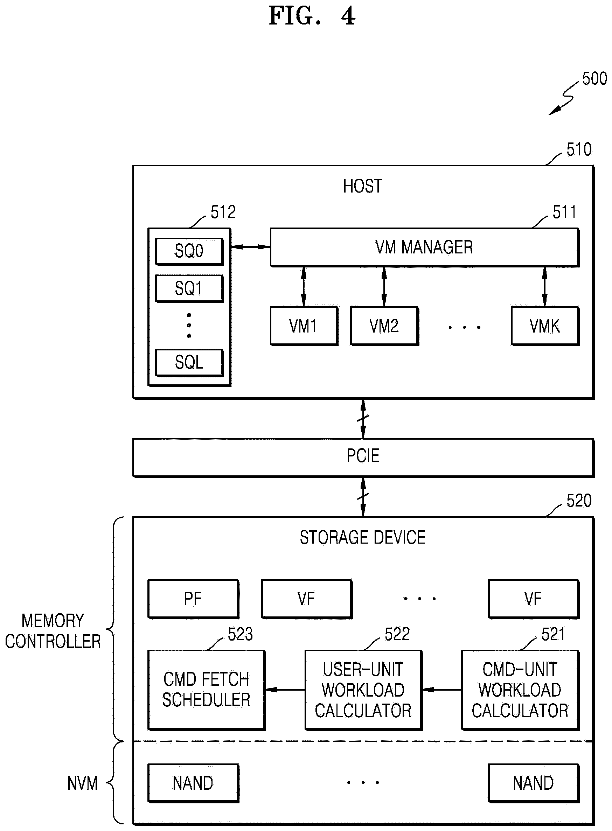

FIG. 4 is a block diagram of a data processing system 500 according to some example embodiments. FIG. 4 illustrates an example in which a host and a storage device communicate with each other through a PCIe bus according to an NVMe interface.

Referring to FIG. 4, the data processing system 500 may include a host 510 and a storage device 520, and the host 510 may include a VM manager 511. A plurality of VMs VM1 to VMK may be generated by the host 510 via the control of the VM manager 511. Also, the plurality of VMs VM1 to VMK may be assigned to a plurality of users. In an example, any one of the VMs VM1 to VMK may be assigned to each of the users.

The VM manager 511 may generate an SQ upon a request from a VM and assign the SQ to the VM. For example, the host 510 may include a host memory 512, and a plurality of SQs SQO to SQL assigned to the plurality of users may correspond to at least a partial storage space of the host memory 512. However, example embodiments are not limited thereto, and the plurality of SQs SQO to SQL may be included in another memory that is different from the host memory 512. Although FIG. 4 illustrates the plurality of SQs SQO to SQL configured to store commands to be provided to the storage device 520, the host 510 may further include a completion queue (not shown) configured to store a response provided from the storage device 520.

Moreover, the storage device 520 may include a memory controller and an NVM and further include at least one physical function (PF). In addition, because a single root input/output virtualization (SR-IOV) function according to the NVMe interface is provided, the storage device 520 may generate at least one virtual function (VF). The at least one VF may be in the memory controller of the storage device 520 in response to a request from the host 510, and the at least one PF and the at least one VF may independently process data access requests from the host 510. Each of the VMs VM1 to VMK may correspond to any one PF or VF, and each of the users may provide a command to the inside of the storage device 520 through the VM assigned thereto and the PF (or VF) corresponding to the VM.

Although not shown in FIG. 4, storage regions (e.g., memory blocks) of the NVM may be classified into a plurality of namespaces. At least one namespace may be assigned to each of the users, and the PF or VF may access storage regions of the at least one namespace assigned to each of the users. As an example, in the storage region of the namespace assigned to a user who frequently reads a specific area or writes data according to a random pattern, recovery code (e.g., read reclaim) or a background operation (e.g., garbage collection) may occur relatively frequently, and thus, a greater workload, for example, compared to a different pattern, may be caused on the storage device 520.

A command provided from the host 510 may include a command ID. Also, the command may include VM information indicating a user who has issued the command and/or an SQ assigned to the user. Accordingly, the storage device 520 may calculate a CMD-unit workload to process at least one NAND operation included in the command and calculate a user-unit workload to process a plurality of commands.

In some example embodiments, the memory controller of the storage device 520 may include a CMD-unit workload calculator 521, a user-unit workload calculator 522, and a CMD fetch scheduler 523. The CMD-unit workload calculator 521 may calculate a CMD-unit workload according to some example embodiments, and the user-unit workload calculator 522 may calculate a user-unit workload for each user who issued at least one command. In addition, the CMD fetch scheduler 523 may schedule commands to be fetched next according to a workload calculated by a user unit. Via the control of the CMD fetch scheduler 523, a command fetch unit (not shown) may perform a CMD fetch scheduling operation such that the command is preferentially fetched from an SQ assigned to a user having priority.

According to some example embodiments, a fetch of the next command may be scheduled based on the influence that a command of each user actually has on the storage device 520, and a command issued by a user with a relatively small influence may be fetched first. Thus, fairness may improve when the storage device 200 is shared by the plurality of users.

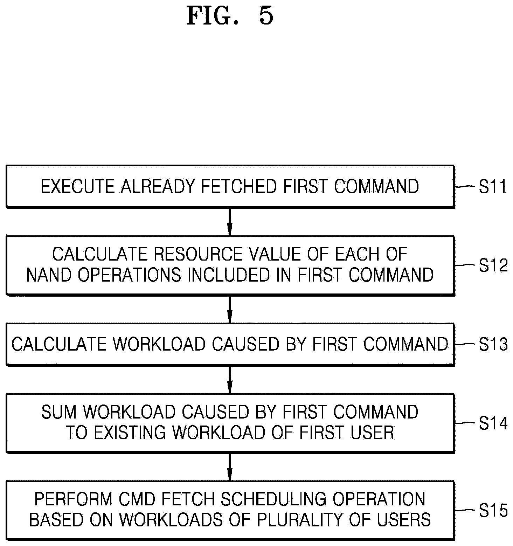

FIGS. 5 to 7 are flowcharts of an operating method of a storage device, according to some example embodiments.

Referring to FIG. 5, the storage device may include a memory controller and a memory device, and the memory controller may communicate with a host according to a predetermined (or, alternatively, desired or selected) interface. As an example, the memory controller may communicate with the host according to an NVMe interface, and the host may include a plurality of SQs that are independently assigned to a plurality of users. Also, the memory controller may fetch commands from the host. According to some example embodiments, the memory controller may perform a CMD fetch scheduling operation by applying priority to users.

The memory controller may execute an already fetched first command (S11). As an example, the memory controller may perform at least one NAND operation included in the first command from a first user. Resource consumption of the storage device may occur due to the at least one NAND operation, and a resource value indicating a degree of resource consumption due to each of the at least one NAND operation may be calculated (S12). The memory controller may calculate a workload caused by the first command, based on the resource value calculated for the at least one NAND operation (S13). Also, the memory controller may calculate a user-unit workload including the workload caused by the first command of the first user. As an example, the workload calculated by the first command may be added to a current workload of the first user (S14).

To fetch the next command after the execution of the first command is completed, the memory controller may perform a CMP fetch scheduling operation, which includes checking workloads of the plurality of users including the first user and preferentially fetching a command of a user with relatively high priority (S15). Priority between the plurality of users may be determined according to various policies. For example, priority may be given to a user who has caused a smallest workload, from among the plurality of users. Alternatively, when the storage device is used for a cloud system and fees are charged to users, priority may be applied in a way that allows a greater workload to a user who is charged with a higher fee. In some example embodiments, different conditions may be used to determine priority, for example, based on an application associated with the command, a time period difference between devices/users, etc.

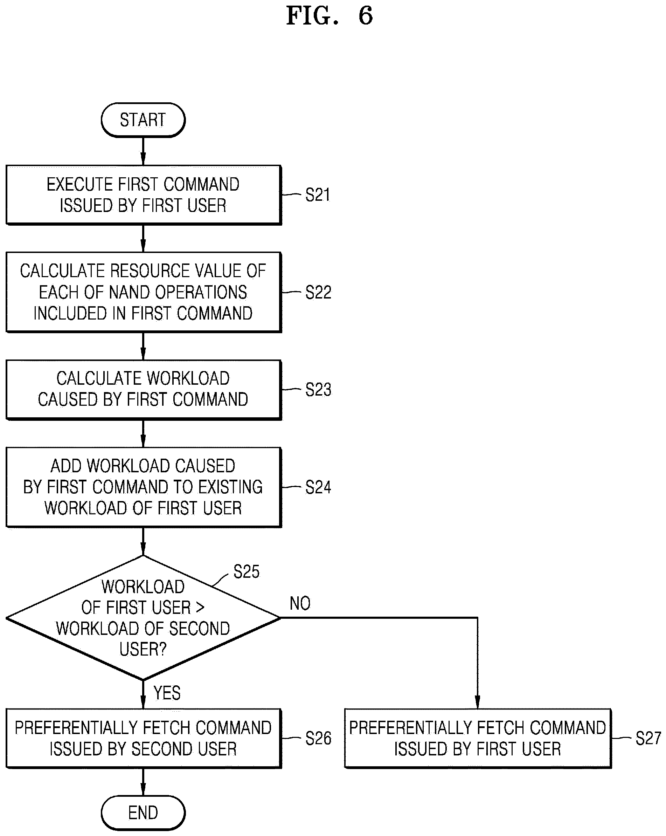

Moreover, FIG. 6 illustrates an example in which priority changes between the first user and a second user.

The memory controller may execute the first command provided by the first user (S21) and calculate a resource value indicating a degree of resource consumption in the at least one NAND operation included in the first command (S22). Also, the memory controller may calculate a workload caused by the first command, based on the resource value calculated for at least one NAND operation (S23). In addition, the memory controller may calculate a user-unit workload including the workload of the first command of the first user. As an example, the memory controller may add the workload of the first command to the current workload of the first user (S24).

To determine priority between the first user and the second user, the workload of the first user may be compared with a workload of the second user (S25). For example, when it is determined that the workload of the first user is greater than the workload of the second user, to fetch a next command, priority may be given to the second user, and thus, a command issued by the second user may be preferentially fetched (S26). In contrast, when it is determined that the workload of the second user is greater than the workload of the first user, to fetch the next command, priority may be given to the first user, and thus, a command issued by the first user may be preferentially fetched (S27). That is, while a command is being fetched by giving priority to the first user, at a point in time at which the workload of the first user becomes greater than the workload of the second user, a CMD fetch scheduling operation may be changed such that the second user has higher priority than the first user.

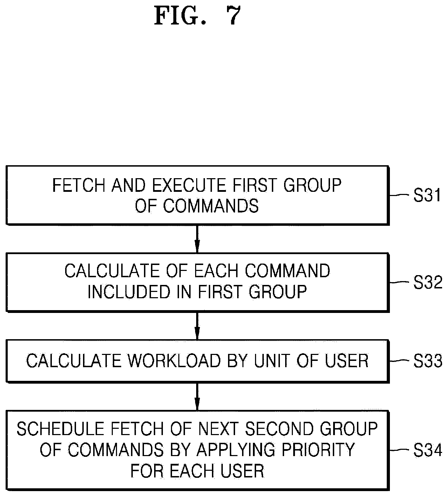

FIG. 7 illustrates a CMD fetch scheduling operation according to some example embodiments. Specifically, FIG. 7 illustrates a case in which commands are fetched by a unit of a group including a plurality of commands, and the CMD fetch scheduling operation is performed by determining workloads of the commands included in the group.

Referring to FIG. 7, a storage device may fetch a first group of commands from a host and execute the fetched commands (S31). The first group may include a plurality of commands issued by a plurality of users, and a workload of each of the commands in the first group may be calculated (S32). An operation of calculating a workload by a user unit may be performed based on the calculation results of workloads of the first group of commands (S33).

To fetch a second group of commands based on the result of the workload calculated by the user unit, a CMD fetch scheduling operation may be performed by applying priority between users (S34). For example, a command issued by a user who has caused a relatively small workload during the execution of the first group of commands may be preferentially included in the next second group.

A workload for each group may be independently determined, and priority between the plurality of users may be applied to the next group based on the determination result. For example, a workload calculated for the first group of commands may be used to schedule a fetch of the next second group of commands. Also, a workload calculated for the second group of commands may be used to schedule a fetch of the next third group of commands.

Alternatively, in some example embodiments, workloads calculated for commands included in a group may be continuously accumulated, and the CMD fetch scheduling operation according to some example embodiments may be performed at a point in time at which a group of commands is fetched. For example, the workload caused by the first group of commands may be added to the current workloads of the users, and the fetch of the second group of commands may be scheduled based on the summed workload. Also, a workload caused by the second group of commands may be added to the current workloads of the users, and a fetch of a third group of commands may be scheduled based on the summed workload. That is, according to some example embodiments, instead of scheduling a fetch of each command, a fetch of commands may be scheduled by applying priority by the unit of one group (or by the unit of a plurality of commands).

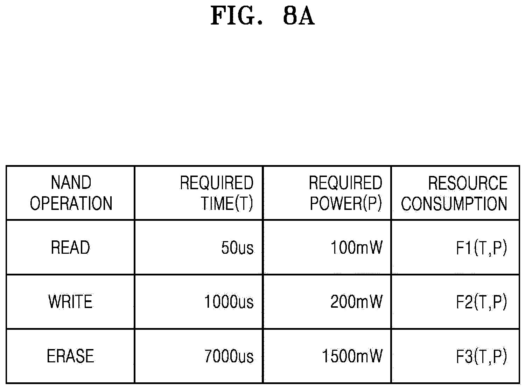

FIGS. 8A to 12 are diagrams of methods of monitoring workloads, according to some example embodiments. A configuration illustrated in each of FIGS. 8A to 12 illustrates one example applicable to some example embodiments, and the example embodiments are not limited thereto. A user-unit workload may be calculated according to various methods, and a CMD fetch scheduling may be performed based on the user-unit workload.

Referring to FIG. 8A, a workload caused by the execution of a command may be calculated through a predetermined (or, alternatively, desired or selected) measurement operation in a storage device. For example, there may be various types of factors that cause resource consumption during NAND operations. In FIG. 8A, required time and required power of the NAND operations are illustrated as examples of the factors that cause the resource consumption. However, according to some example embodiments, resource consumption caused by the NAND operation may be determined by further measuring other factors.

When a read operation is performed as the NAND operation, time and power required for the read operation may be measured. As an example, the required time T may be measured as 50 µs, and the required power P may be measured as 100 mW. Conversely, in a write operation and an erase operation, a greater required time T and greater required power P may be measured than in the read operation. For example, the required time T for the write operation may be measured as 1000 µs, and the required power P for the write operation may be measured as 200 mW. Also, the required time T for the erase operation may be measured as 7000 µs, and the required power P for the erase operation may be measured as 1500 mW.

A resource value for each NAND operation may be calculated through an operation of the measured values. As an example, in the read operation, a resource value may be calculated through a first operation on the required time T and the required power P, and in the write operation, a resource value may be calculated through a second operation on the required time T and the required power P. In the erase operation, a resource value may be calculated through a third operation F3 on the required time T and the required power P. In some example embodiments, the first operation F1, the second operation F2, and the third operation F3 may include the same formula as each other. Alternatively, in some example embodiments, the first operation F1, the second operation F2, and the third operation F3 may include different formulas from each other.

A CMD-unit workload may be calculated by using the resource value calculated as described above. As an example, when a command includes one NAND operation, the CMD-unit workload may have a value corresponding to a resource value calculated for the one NAND operation. In another case, when the command includes at least two NAND operations, the CMD-unit workload may be calculated by processing an operation using resource values calculated for the at least two NAND operations.

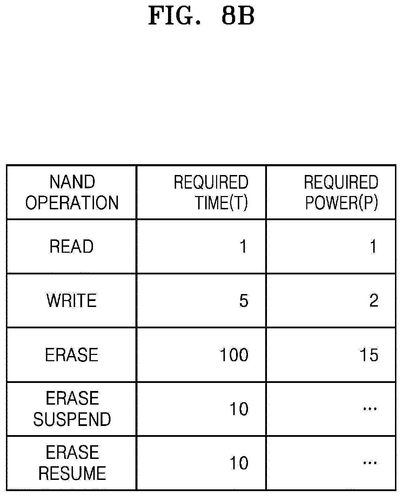

Referring to FIG. 8B, a resource value for each NAND operation may be calculated based on table information. As an example, different points PT may be assigned to required time and required power according to a NAND operation, and a resource value for each NAND operation may be calculated by using the points PT of the required time and the required power. For example, the sum of the points PT of the required time and the required power may correspond to the resource value. Alternatively, the resource value may be calculated by a formula operation using the points PT of the required time and the required power. Similar to example embodiments of FIG. 8A, a CMD-unit workload may be calculated by using a resource value calculated for at least one NAND operation included in a command.

As an example, in a read operation, a point PT of 1 may be assigned to the required time, and a point PT of 1 may be assigned to the required power. In a write operation, a point PT of 5 may be assigned to the required time, and a point PT of 2 may be assigned to the required power. In an erase operation, a point PT of 100 may be assigned to the required time, and a point PT of 15 may be assigned to the required power. When the erase operation is suspended (Erase Suspend), a point PT of 10 may be assigned to the required time. When the erase operation is resumed (Erase Resume), a point PT of 10 may be assigned to the required power. However, the point PT is not limited to the example shown in FIG. 8B and may be set as various other values, and points PT for at least one other factor may be given and further used to calculate a workload.

The calculation of workloads related to the suspension and resumption of the erase operation may be performed according to various policies. As an example, while an erase operation is being performed in response to a first command of a first user, when a command requesting a read operation from the same user or another user (e.g., a second user) needs to be executed, the erase operation may be suspended. Thereafter, the erase operation may be resumed when a command from the first user or the second user is executed. In this case, a workload resulting from the suspension or resumption of the erase operation may be reflected in a command that has caused the suspension or resumption of the erase operation.

As an example, while the erase operation is being performed in response to the first command, when a second command including a read request from the same first user is executed, a workload resulting from the suspension of the erase operation may be reflected in the second command. Alternatively, when a second command including a read request from a different user (for example, the second user) is executed during the erase operation performed in response to the first command, a read response to the second user may be provided rapidly, and a workload resulting from the suspension of the erase operation may be reflected in the second command from the second user. In addition, when the erase operation is resumed, a workload resulting from the resumption of the erase operation may be reflected in a command from the first user or the second user, which has caused the resumption of the erase operation.

According to some example embodiments, a workload may be calculated through actual measurement or conformation of table information in at least one NAND operation included in each command. Alternatively, a CMD-unit workload may be calculated based on a combination of actual measurement of various factors and table information.

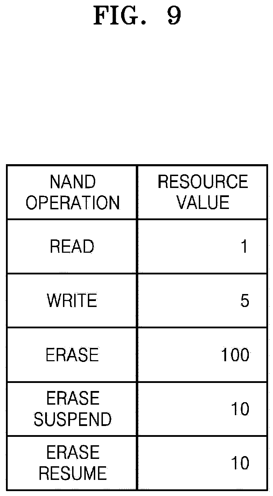

Some example embodiments pertain to a case in which a CMD-unit workload is calculated based on a resource value for a NAND operation shown in FIG. 9. As in some example embodiments as above, the resource value shown in FIG. 9 may be a value calculated through actual measurement of at least one factor or a value calculated based on table information. Alternatively, the resource value shown in FIG. 9 may be a value calculated based on a combination of actual measurement of at least one factor and table information. Furthermore, because each of resource values shown in FIG. 9 corresponds to a workload of each NAND operation, it is assumed that the CMD-unit workload is calculated by summing resource values of NAND operations included in a command.

FIG. 9 illustrates a case in which, from among NAND operations, a read operation has a resource value of 1, a write operation has a resource value of 5, an erase operation has a resource value of 100, and each of an erase suspension operation and an erase resumption operation has a resource value of 10. For example, when one command includes a read operation and a write operation, a workload of the command may be calculated as 6. When one command includes a write operation and an erase operation, a workload of the command may be calculated as 105.

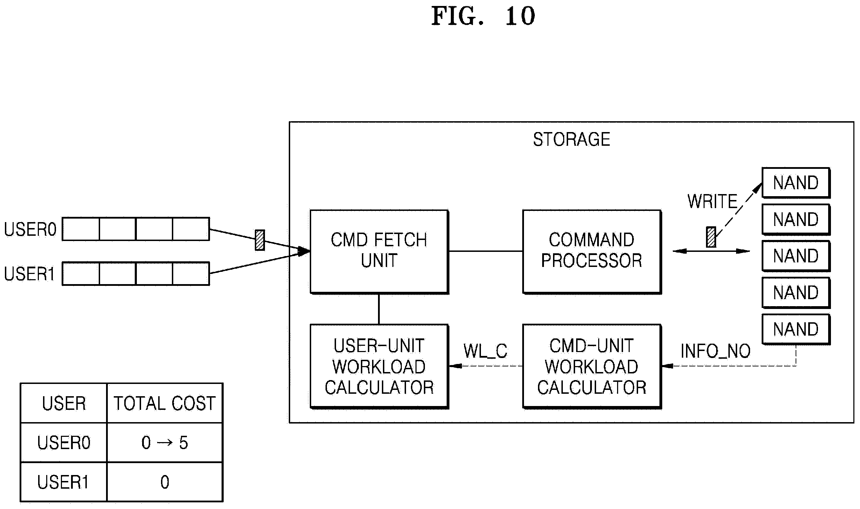

FIG. 10 illustrates an example of calculating a workload of a first user due to the execution of a command from the first user.

Referring to FIG. 10, a workload of a first user UserO may be currently equal to a workload of a second user User1, and thus, a command issued by the first user UserO may be arbitrarily fetched first. Alternatively, the workload of the first user UserO may be currently less than the workload of the second user User1, the command issued by the first user User1 may be fetched first. A command processor may perform at least one NAND operation included in the command from the first user User1. A write operation may be included in the command, and thus, a data write operation may be performed on a NAND chip. NAND operation information Info_NO, which indicates a type (e.g., a write operation) of the NAND operation, may be provided to a CMD-unit workload calculator, and the CMD-unit workload calculator may provide a calculation result WL_C of a CMD-unit workload to a user-unit workload calculator.

In some example embodiments as shown in FIG. 10, because the write operation is performed in response to the command from the first user UserO, the user-unit workload calculator may add a workload caused by the write operation to the current workload of the first user UserO. As an example, when workloads of both the first user UserO and the second user User1 are currently 0, the workload of the first user UserO may increase from 0 to 5 due to the execution of the command from the first user UserO. Thereafter, when the next command is fetched, because the workload of the first user UserO is greater than the workload of the second user User1, priority may be given to the second user User1. That is, when the next command is fetched, a command issued by the second user User1 may be fetched before a command issued by the first user UserO.

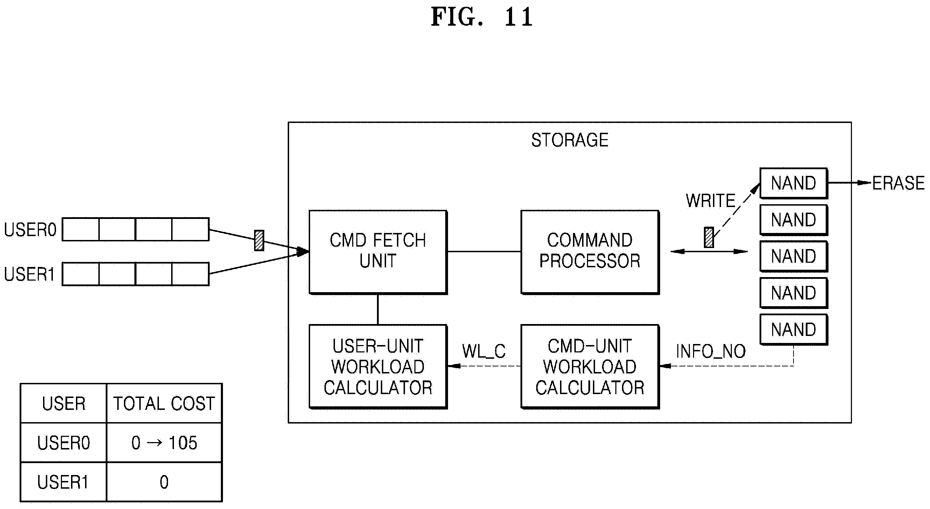

FIG. 11 illustrates an example of calculating a workload when an erase operation is performed on a NAND chip due to the execution of a command from a first user.

Referring to FIG. 11, a command issued by a first user UserO may be fetched, and at least one NAND operation included in the command may be performed. A write operation may be included in the command, and thus, a data write operation may be performed on a NAND chip. In this case, when at least one block needs to be erased to ensure a free block of the NAND chip at a location where data is to be written, an erase operation on the block of the NAND chip may be performed first, and then data may be written to the erased block. In this case, an erase operation and a write operation may be performed during the execution of the command from the first user UserO. A workload caused by the erase operation and the write operation may be reflected in the command issued by the first user UserO.

NAND operation information Info_NO, which indicates a type (e.g., a write operation and an erase operation) of the NAND operation, may be provided to a CMD-unit workload calculator, and the CMD-unit workload calculator may provide a calculation result WL_C of a CMD-unit workload to a user-unit workload calculator. As an example, when the erase operation is performed on one block in response to the command from the first user UserO, the CMD-unit workload calculator may calculate a workload value of 105, which is the sum of a workload value of 100 due to the erase operation and a workload value of 5 due to the write operation, as a workload of the command.

The user-unit workload calculator may add the workload calculated for the command to the current workload of the first user UserO. As an example, when workloads of both the first user UserO and a second user User1 are 0, the workload of the first user UserO may increase from 0 to 105 due to the execution of the command from the first user UserO. Thereafter, to fetch the next command, priority may be given to the second user User1 because the workload of the first user UserO is greater than the workload of the second user User1. That is, to fetch the next command, a command issued by the second user User1 may be fetched before the command issued by the first user UserO.

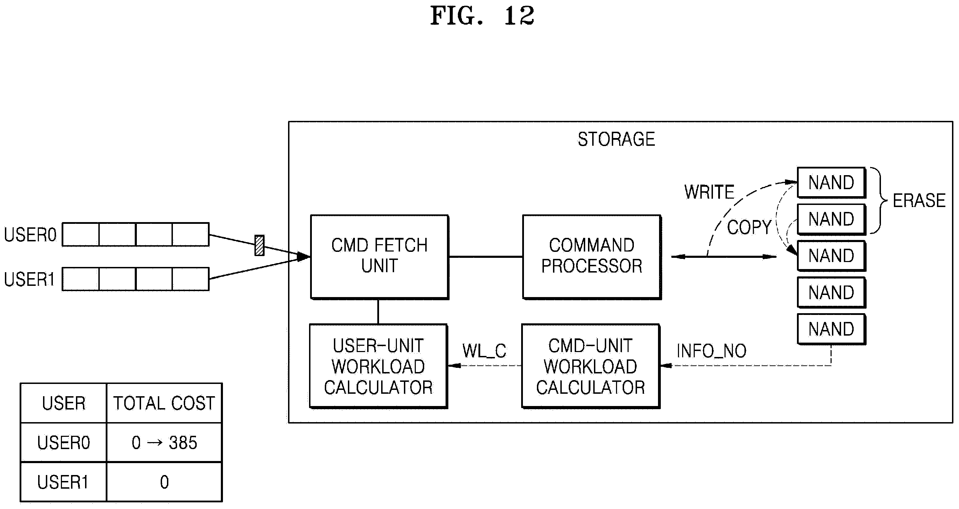

FIG. 12 illustrates an example of calculating a workload when a garbage collection operation is caused in a NAND chip due to the execution of a command from a first user. FIG. 12 illustrates an example in which 30 pieces of valid data included in two source blocks are copied to one target block and an erase operation is performed on the source blocks after the copying of the 30 valid data is completed.

A data write operation may include a sequential write operation in which data is sequentially written to blocks of a NAND chip and a random write operation in which data is randomly written to the blocks. The resource consumption of the storage device in the sequential write operation may be different than in the random write operation. As an example, when data is randomly written, a greater number of garbage collection operations may be caused than when data is sequentially written. Accordingly, a workload caused by a garbage collection operation may be reflected in a command, which is issued by a user and causes the garbage collection operation.

Referring to FIG. 12, a command issued by a first user UserO may be fetched, and at least one NAND operation included in the command may be performed. A write operation may be included in the command, and thus, a data write operation may be performed on the NAND chip. In this case, when a garbage collection operation needs to be performed on a NAND chip at a location where data is to be written, valid data in source blocks of the NAND chip may be copied to a target block, and an erase operation may be performed on the source blocks. Subsequently, data may be written in the erased source block. In this case, during the execution of the command from the first user UserO, operations of reading and writing valid data, the erase operation on the source blocks, and an operation of writing write data may be performed. Workloads caused by the read operation, the write operation, and the erase operation may be reflected in the command issued by the first user UserO.

NAND operation information Info_NO, which indicates a type (e.g., a write operation and an erase operation) of the NAND operation, may be provided to a CMD-unit workload calculator, and the CMD-unit workload calculator may provide a calculation result WL_C of a CMD-unit workload to a user-unit workload calculator. As an example, the CMD-unit workload calculator may add up a workload of 200 by 2 erase operations, a workload of 30 by 30 read operations of valid data, a workload of 150 by 30 write operations of valid data, and a workload of 5 by a write operation of the write data and calculate a summed value of 385 as a workload of the command.

The user-unit workload calculator may add the determined workload for the command to the current workload of the first user UserO. As an example, when workloads of both the first user UserO and the second user User1 are currently 0, the workload of the first user UserO may increase from 0 to 385 due to the execution of the command from the first user UserO. Thereafter, when the next command is fetched, because the workload of the first user UserO is greater than the workload of the second user User1, priority may be given to the second user User1. That is, when the next command is fetched, a command issued by the second user User1 may be fetched before the command issued by the first user UserO.

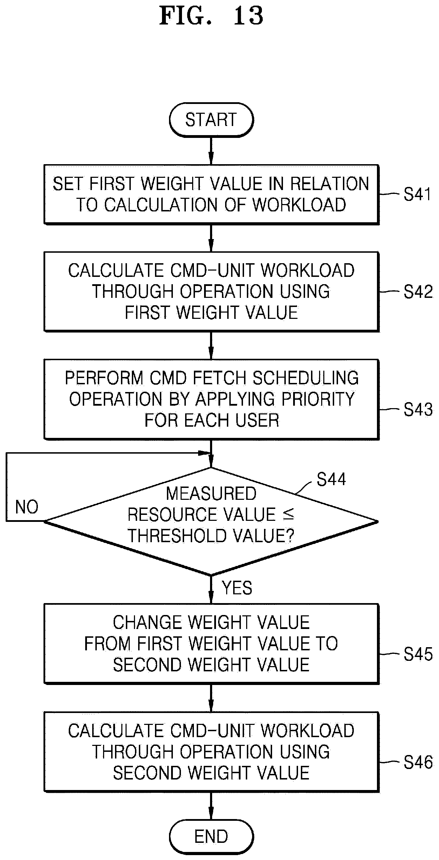

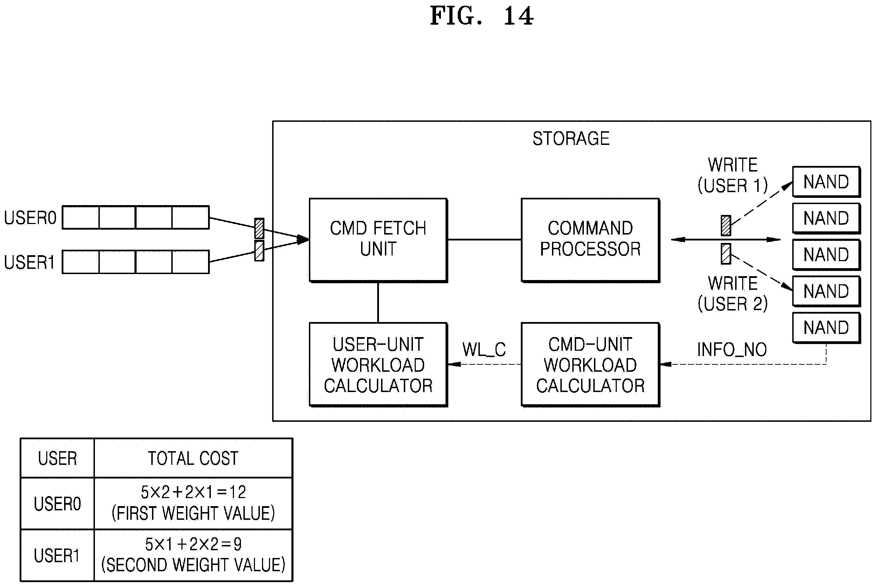

FIGS. 13 and 14 illustrate an example of dynamically changing a weight value set for a plurality of factors in calculating a workload. The required time and required power of a NAND operation are illustrated as factors in calculating a resource value in FIGS. 13 and 14.

In some example embodiments, assuming that a system on which a storage device is mounted is a mobile device, such as a laptop computer, a tablet, or a smartphone, a weight value may be differently set according to the environment of the mobile device. As an example, when power is connected to the system on which the storage device is mounted or when a current battery level remains sufficient above a reference value, a weight value for the required power may be set relatively small. In some example embodiments, when power is connected to the system on which the storage device is mounted, only the required time may be used as a factor in calculating a workload. In contrast, when power is not connected to the system on which the storage device is mounted but a battery is used, a ratio between weight values for the required time and the required power may be set to 2:1. In addition, when the battery level is reduced below the reference value, the weight value for the required time and required power may be dynamically changed to 1:2. When a remaining battery level of the battery is very small, only the required power may be used as a factor in calculating the workload. The above-described example of setting the weight value corresponds to applicable example embodiments, and a weight value according to some example embodiments may be set by various methods using various types of factors.

Referring to FIG. 13, a storage device may set a first weight value in relation to the calculation of a workload (S41). The first weight value may include values set for various factors, and a resource value or a workload for each NAND operation may be calculated through an operation using the first weight value. A memory controller of the storage device may calculate a CMD-unit workload by performing an operation on each of at least one NAND operation by using the first weight value (S42). In addition, the memory controller may determine priority for each user, based on a workload calculated by a user unit, and perform a CMD fetch scheduling operation based on the priority for each user (S43).

The storage device may periodically or aperiodically measure an internal resource state and compare the internal resource state with a predetermined (or, alternatively, desired or selected) threshold value (S44). In some example embodiments, the internal resource state may correspond to a battery level, and the battery level may be compared with the predetermined (or, alternatively, desired or selected) threshold value. Alternatively, in some example embodiments, the internal resource state may include various other factors. As an example, because blocks with relatively great erase/write counts are likely to be processed as bad blocks, the internal resource state may correspond to an erase/write count. In this case, a comparison may be made to determine whether the erase/write count is greater than predetermined (or, alternatively, desired or selected) threshold value.

Assuming that the internal resource state corresponds to the battery level, when the battery level is greater than a threshold value, the first weight value may remain unchanged. Otherwise, when the battery level is less than or equal to the threshold value, a weight value used to calculate the workload may be changed to a second weight value (S45), and at least one of values included in the second weight value may be different from values included in the first weight value. Thereafter, the memory controller of the storage device may execute each command and calculate a workload caused by the command through an operation using the second weight value (S46). The memory controller may perform a CMD fetch scheduling operation based on the calculation result.

Referring to FIG. 14, a weight value of 2 may be set for required time, and a weight value of 1 may be set for required power. A first command issued by a first user UserO and a second command issued by a second user User1 may be fetched, and at least one NAND operation included in the first command may be performed first. Because a write operation is included in the first command, a data write operation may be performed on a NAND chip. Assuming that a resource value of each NAND operation is calculated based on the value shown in FIG. 8B, in the write operation, a point PT of 5 may be applied to the required time, and a point PT of 2 may be assigned to the required power. Some example embodiments illustrate examples in which the resource value of each NAND operation is calculated based on values of the required time and the required power shown in FIG. 8B. However, example embodiments are not limited to the values, and various other values may be set.

To calculate a workload for the first command, because a weight value of 2 is set for the required time, the workload for the first command may be calculated as 12, which corresponds to 5*2 + 2*1. NAND operation information Info_NO, which indicates a type (e.g., a write operation) of the NAND operation, may be provided to a CMD-unit workload calculator, and the CMD-unit workload calculator may provide a result WL_C of a CMD-unit workload, which is calculated based on a weight value operation, to a user-unit workload calculator. Thus, as shown in FIG. 14, when workloads of both the first user UserO and the second user User1 are currently 0, the workload of the first user UserO may increase from 0 to 12 due to the execution of the first command from the first user UserO.

Subsequently, a first weight value related to the calculation of the workload is changed to a second weight value, and whether to change the weight value may be determined by using various methods. For example, according to some example embodiments, it is assumed that the weight value is changed based on a remaining battery level. When the battery level is reduced below a predetermined (or, alternatively, desired or selected) threshold value, a weight value for the required power may increase to calculate the workload. As an example, a weight value for the required time may be set as 1, and a weight value for the required power may be set as 2. After the weight value is changed, the second command from the second user User1 may be executed, and a workload caused by a write operation included in the second command may be calculated as a value of 9, which correspond to 5*1 + 2*2. Thus, as shown in FIG. 14, when the workload of the second user User1 is currently 0, the workload of the second user User1 may increase from 0 to 9 due to the execution of the second command issued by the second user User1. That is, even when commands of the same type and size are executed, different workloads may be calculated depending on a resource state of a storage device.

When the next command is fetched, the workload of the first user UserO may be compared with the workload of the second user User1. Because the workload of the first user UserO is greater than the workload of the second user User1, priority may be given to the second user User1. That is, when the next command is fetched, a command issued by the second user User1 may be fetched before a command issued by the first user UserO.

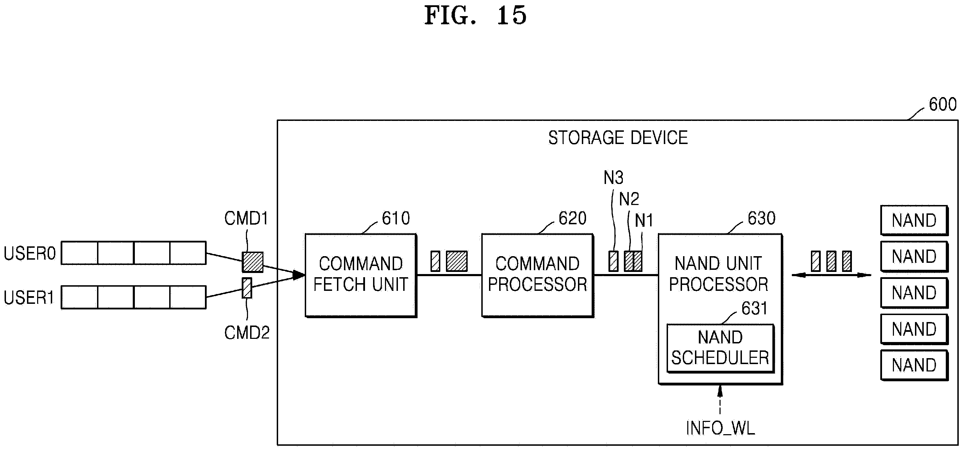

FIG. 15 illustrates an example of calculating a workload by a unit of a NAND operation, according to some example embodiments. As an example, some example embodiments as shown in FIG. 15 pertain to examples in which, before all NAND operations included in one command are performed, a workload calculated by a unit of a NAND operation may be added to a workload of a user, and the order of performance of the NAND operations is scheduled based on the summation result.

Referring to FIG. 15, a storage device 600 may include a command fetch unit 610, a command processor 620, and a NAND unit processor 630, and the NAND unit processor 630 may include a NAND scheduler 631. A workload caused by performing each NAND operation may be calculated, the calculated workload may be added to the workload of the user, and workload information Info_WL of the user, which is summed by a unit of a NAND operation, may be provided to the NAND unit processor 630.

The command fetch unit 610 may fetch a first command CMD1 from a first user, fetch a second command CMD2 from a second user, and provide the first command CMD1 and the second command CMD2, which are fetched, to the command processor 620. Because the current workload of the first user is less than that of the second user, the first command CMD1 may be executed before the second command CMD2. Also, the command processor 620 may divide the first command CMD1 into a first NAND operation N1 and a second NAND operation N2 according to a unit of a NAND operation. In addition, the second command CMD2 may include a third NAND operation N3 as one NAND operation.

The NAND unit processor 630 may perform a processing operation by the unit of a NAND operation. According to some example embodiments, when the first NAND operation N1 is performed, a workload caused by the first NAND operation N1 may be provided to a user-unit workload calculator (not shown) and added to a workload of the first user. In this case, because the first NAND operation N1 has high resource consumption, a response to the second command CMD2 provided by the second user may be delayed (for example, by a large amount), which may degrade the response performance of the storage device 600 and reduce fairness for the second user.

According to some example embodiments, after the first NAND operation N1 is performed, the NAND scheduler 631 may compare the workload of the first user with a workload of the second user by referring to the workload information Info_WL, and then schedule the order of processing of the NAND operations. As an example, when the workload of the first user becomes greater than the workload of the second user due to the first NAND operation N1, the NAND scheduler 631 may perform a scheduling operation such that the third NAND operation included in the second command CMD2 is performed before the second NAND operation included in the first command CMD1. Accordingly, the processing of the second command CMD2 may be completed before all NAND operations of the first command CMD1 are completed.

According to some example embodiments described above, by preventing or reducing a response to a command from a specific user from being significantly delayed, the performance of the storage device 600 may be prevented or reduced from deteriorating while maintaining user fairness. Furthermore, the storage device 600 may process a plurality of commands in parallel in a pipeline manner. In this case, when a workload is monitored by a unit of a command and added to a workload of a user, it may take a long time for the workload to be reflected on the user. However, according to some example embodiments, NAND operations may be scheduled based on the calculation and summation of NAND-operation-unit workloads, and thus, user fairness may improve and the performance of the storage device 600 may be prevented or reduced from deteriorating. For example, according to some example embodiments, there may be an increase in speed, accuracy, device life, reliability, and/or power efficiency of communication and operation of the device based on the above methods. Therefore, the improved devices and methods overcome the deficiencies of the conventional devices and methods of memory devices related to including usage of multiple memory devices while reducing resource consumption, data accuracy, and increasing data clarity. Further, there is an improvement in communication control and reliability between different users/hosts sharing storage devices by providing the abilities disclosed above.

Some example embodiments pertain to an example in which the NAND operations are scheduled based on the calculation of the NAND-operation-unit workloads, but example embodiments are not limited thereto. For example, according to some example embodiments, a command may be executed based on a workload for each user. When it takes a very long time to execute a command of a specific user, a scheduling operation may be performed by applying a timeout such that a NAND operation included in a command from another use is performed first. Alternatively, when a command of the first user is executed first and it takes a very long time to execute the command of the first user, NAND operations may be scheduled such that NAND operations of the first user and the second user, which can be performed in parallel (e.g., read operations), are performed in parallel. Thus, user fairness may be improved and/or ensured, and the performance of the storage device 600 may be prevented or reduced from deteriorating.

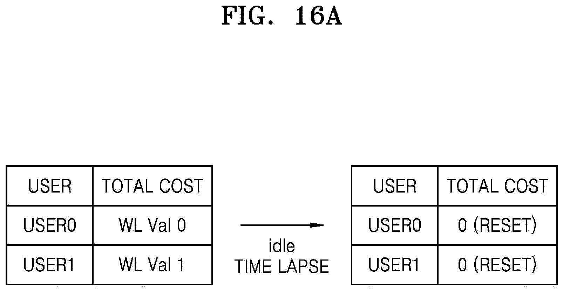

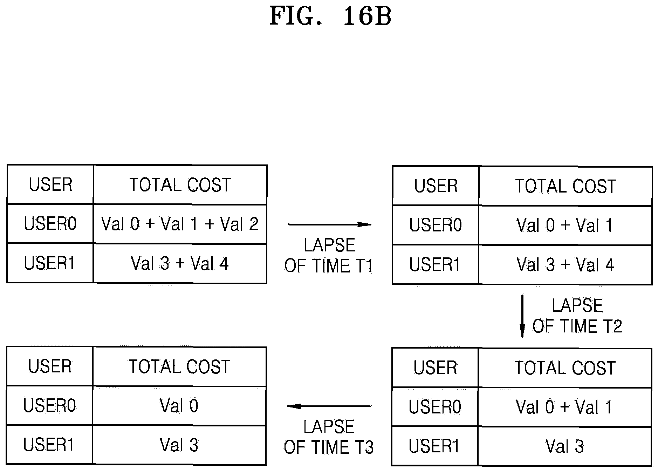

FIGS. 16A and 16B illustrate an example of calculating a workload according to some example embodiments. FIGS. 16A and 16B illustrate an example of resetting a workload calculated for each user over time or reducing a workload value.

Referring to FIG. 16A, a workload value as a total cost incurred by a first user may be calculated as a first value WL Val 0, and a workload value of a second user may be calculated as a second value WL Val 1. The workload value may correspond to the sum of workloads resulting from the execution of at least one command issued by each user.

When a workload caused by the first user is greater than a workload caused by the second user, a command of the second user may be fetched and executed preferentially. In addition, an idle section in which a storage device is not accessed by the first user and the second user may last for a long time. After the idle section, the command of the second user may be fetched preferentially when the storage device is accessed by the first user and the second user. In this case, a command provided by the first user may not be executed for a long time.

According to some example embodiments, policies may be applied to reset the current workloads of users over time or reduce workload values thereof. For example, as shown in FIG. 16A, when the idle section in which the storage device is not accessed by the first user and the second user continues for a predetermined (or, alternatively, desired or selected) time, workload values of the first user and the second user may be reset. In this case, the workload values of both the first user and the second user may be reset to 0. Thus, to fetch subsequent commands, a fetch scheduling operation may be performed on the first user and the second user in an initial state.

Moreover, as shown in FIG. 16B, a policy of reducing part of a workload value of each user over time may be applied. As an example, the workload of the first user may correspond to the sum (Val 0 + Val 1 + Val 2) of the first to third values Va1 0 to Val 2, and the workload of the second user may correspond to the sum (Val 3 + Val 4) of fourth and fifth values Val 3 and Val 4. In some example embodiments, each of the first to fifth values Val 0 to Val 4 may correspond to a workload caused by the execution of any one command.

Part of a workload value of each user may be reduced over time. As an example, the third value Val 2 may be subtracted from the workload of the first user over a first time T1, the fifth value Val 4 may be subtracted from the workload of the second user over a second time T2, and the second value Val 1 may be subtracted from the workload of the first user over a third time T3. For example, a workload value that is reduced over time may correspond to a workload caused by a command that is executed first by each user. That is, after the third value Val 2 is subtracted from the workload of the first user in response to the command executed first by the first user, the second value Val 1 may be subtracted from the workload of the first user in response to the next executed command. Also, the fifth value Val 4 may be subtracted from the workload of the second user in response to a command that is executed first by the second user.

According to some example embodiments as described above, a workload of a user may be prevented or reduced from being calculated as a great value for a long time due to a workload caused by a command provided by the specific user over a predetermined (or alternatively, desired or selected) time ago. That is, by applying some example embodiments as above, possibility that the command from the specific user cannot be executed for a long time may be reduced. Some example embodiments as shown in FIG. 16B pertain to examples in which a CMD-unit workload value is reduced over time, but example embodiments are not limited thereto. As an example, example embodiments may be such that a preset constant workload value is reduced over time. The first to third timesT1 to T3 may be the same time or time periods that may vary according to a usage environment of the storage device.

In some example embodiments as shown in FIG. 16 in which the workload value is reduced each time a predetermined (or, alternatively, desired or selected) time has elapsed, the time may not need to be the idle section in which the storage device is not accessed. That is, while the storage device is being accessed by the first and second users, an operation of measuring the time may be continuously performed, and a method of reducing a workload value of at least one user each time the predetermined (or, alternatively, desired or selected) time has elapsed may be applied.

Embodiments are not limited to the above-described examples of resetting or reducing the workload value, and various other methods may be applied to the example embodiments. That is, a workload value of each user may be reset or reduced over time according to various other methods.

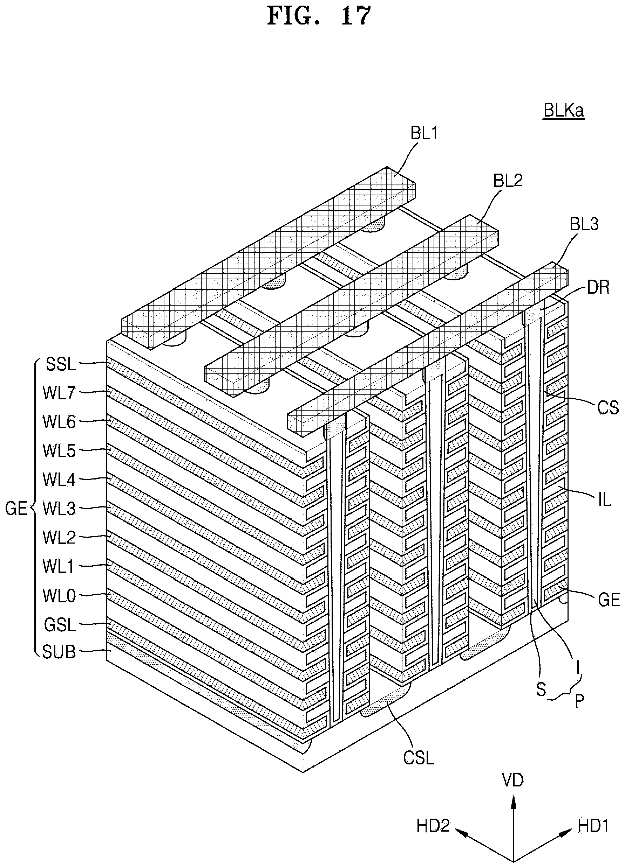

FIG. 17 is a perspective view of a memory block included in an NVM.

Referring to FIG. 17, a memory block BLKa may be formed in a vertical direction to a substrate SUB. The substrate SUB may be of a first conductivity type (e.g., p type) and extend in a second lateral direction HD2 on the substrate SUB. A common source line CSL doped with impurities of a second conductivity type (e.g., n type) may be provided in the substrate SUB. On the substrate SUB between two adjacent common source lines CSL, a plurality of insulating films IL may extend in the second lateral direction HD2 and be sequentially provided in the vertical direction VD, and the plurality of insulating films IL may be a predetermined (or, alternatively, desired or selected) distance apart from each other in the vertical direction VD. For example, the plurality of insulating films IL may include an insulating material, such as silicon oxide.

On a region of the substrate SUB between the two adjacent common source lines CSL, a plurality of pillars P may be sequentially arranged in a first lateral direction HD1 and pass through the plurality of insulating films IL in the vertical direction VD. For example, the plurality of pillars P may be brought into contact with the substrate SUB by passing through the plurality of insulating films IL. For example, a surface layer S of each of the pillars P may include a silicon material of a first type and function as a channel region. Moreover, an inner layer I of each of the pillars P may include an insulating material (e.g., silicon oxide) or an air gap.

In the region between the two adjacent common source lines CSL, a charge storage layer CS may be provided along exposed surfaces of the insulating films IL, the pillars P, and the substrate SUB. The charge storage layer CS may include a gate insulating layer (or also referred to as a 'tunneling insulating layer'), a charge trap layer, and a block insulating layer. For example, the charge storage layer CS may have an oxide-nitride-oxide (ONO) structure. In the region between the two adjacent common source lines CSL, gate electrodes GE, such as a ground selection line GSL, a string selection line SSL, and word lines WLO to WL7, may be provided on an exposed surface of the charge storage layer CS.

Drains contacts or drains DR may be provided on the plurality of pillars P, respectively. For example, the drain contacts or drains DR may include a silicon material doped with impurities of the second conductivity type. On the drains DR, bit lines BL1 to BL3 may extend in the first lateral direction HD1 and be a predetermined (or, alternatively, desired or selected) distance apart from each other in the second lateral direction HD2.

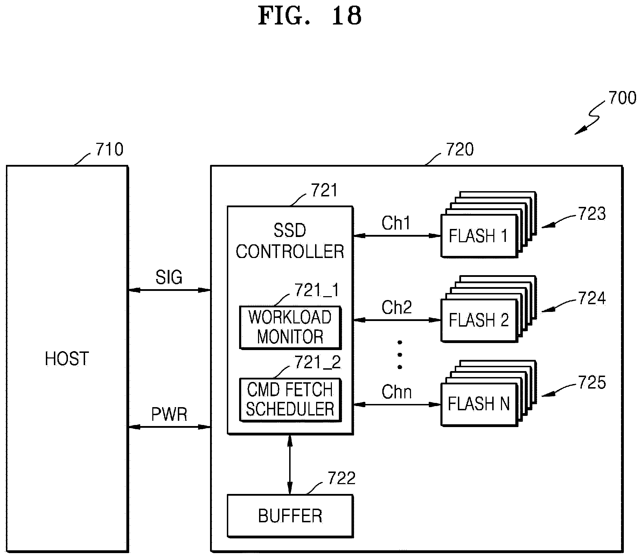

FIG. 18 is a block diagram of an example of applying a storage device to an SSD 720 in a data processing system 700 according to some example embodiments.

Referring to FIG. 18, the data processing system 700 may include a host 710 and an SSD 720. The SSD 720 may transmit and receive a signal SIG to and from the host 710 and receive power PWR from the host 710. The SSD 720 ma include an SSD controller 721, a buffer 722, and NVMs 723_1 to 723_n. Each of the NVMs 723_1 to 723_n may be a vertical-stack-type NAND flash memory device. In this case, the SSD 820 may be implemented according to the example embodiments described above with reference to FIGS. 1 to 17. That is, the SSD controller 721 may include a workload monitor 721_1 and a CMD fetch scheduler 721_2. The workload monitor 721_1 may calculate a CMD-unit workload and also, calculate a user-unit workload. The CMD fetch scheduler 721_2 may perform a scheduling operation of determining the order of fetching of commands from a plurality of users stored in a host, based on the user-unit workload.

In some example embodiments, in a memory operation, the workload monitor 721_1 may calculate a workload by further referring not only resource consumption of the NVMs 723_1 to 723_n but also usage characteristics of various components provided outside the NVMs 723_1 to 723_n. For example, in a memory operation, such as data write and read operations, the buffer 722 may be used to temporarily store data, and an occupancy time of the buffer 722 due to the memory operation may be further used to determine resource consumption.

As described herein, any electronic devices and/or portions thereof according to any of the example embodiments may include, may be included in, and/or may be implemented by one or more instances of processing circuitry such as hardware including logic circuits; a hardware/software combination such as a processor executing software; or any combination thereof. For example, the processing circuitry more specifically may include, but is not limited to, a central processing unit (CPU), an arithmetic logic unit (ALU), a graphics processing unit (GPU), an application processor (AP), a digital signal processor (DSP), a microcomputer, a field programmable gate array (FPGA), and programmable logic unit, a microprocessor, application-specific integrated circuit (ASIC), a neural network processing unit (NPU), an Electronic Control Unit (ECU), an Image Signal Processor (ISP), and the like. In some example embodiments, the processing circuitry may include a non-transitory computer readable storage device (e.g., a memory), for example a DRAM device, storing a program of instructions, and a processor (e.g., CPU) configured to execute the program of instructions to implement the functionality and/or methods performed by some or all of any devices, systems, modules, units, controllers, circuits, architectures, and/or portions thereof according to any of the example embodiments, and/or any portions thereof.

While the inventive concepts have been particularly shown and described with reference to some example embodiments thereof, it will be understood that various changes in form and details may be made therein without departing from the scope of the following claims.

## Claims

1. A memory controller configured to communicate with a host and control a memory device in response to commands from a plurality of users, the memory controller comprising:
a command-unit workload calculator configured to calculate a workload by a unit of each command, based on resource consumption of the memory device, which is generated by performing at least one memory operation included in each of the commands;
a user-unit workload calculator configured to calculate a workload caused by each of the plurality of users, based on the workload calculated by the unit of the command; and
a command fetch unit configured to preferentially fetch, from the host, a command issued by a user who has caused a small workload compared to workloads of the plurality of users, based on calculation results of workloads of the plurality of users.

2. The memory controller of claim 1, wherein the resource consumption comprises at least one of required time for a memory operation, required power for the memory operation, and an occupancy time of a buffer provided inside or outside the memory controller in the memory operation.

3. The memory controller of claim 1 or 2, wherein the memory controller is configured to fetch the command from a plurality of command queues that are separately assigned to the plurality of users in the host,
the command fetch unit comprises a command fetch scheduler configured to perform a scheduling operation such that the command is preferentially fetched from a command queue assigned to a user who has caused a relatively small workload, based on the calculation results of the workloads of the plurality of users.

4. The memory controller of claim 1 or 2, wherein the memory controller is configured to communicate with the host according to an NVM express (NVMe) interface and configured to fetch the command from submission queues, which are included in the host and separately assigned to the plurality of users.

5. The memory controller of claim 4, wherein the memory controller is configured to
generate a plurality of virtual functions upon a request from the host, and the plurality of virtual functions correspond to virtual machines generated in the host, and
transmit commands issued by different users to different virtual functions in the memory controller.

6. The memory controller of claim 4 or 5, wherein the user-unit workload calculator is configured to determine a user that has caused a user-unit workload in which the workload calculated by the unit of the command is to be reflected, based on information about the submission queue included in each of the commands.

7. The memory controller of any preceding claim, wherein
the command fetch unit is configured to
fetch a first group of commands, and
fetch a next second group of commands by applying priority to each of the plurality of users, based on the calculated workloads of the plurality of users after the first group of commands are executed, and
each of the first group of commands and the second group of commands comprises at least two commands.

8. The memory controller of claim 1, wherein the resource consumption is calculated through an operation using a first value related to time required for a memory operation and a second value related to power required for the memory operation, and
the operation comprises a weight value operation of giving a weight value to at least one of the first value and the second value.

9. The memory controller of claim 8, wherein, based on a detection result of a battery level of a storage device adopting the memory controller, in response to the battery level being low, a weight value given to the second value is greater than when the battery level is high.

10. The memory controller of any preceding claim, further comprising a memory operation processor configured to control the processing of at least one memory operation included in each of the commands,
wherein
the command-unit workload calculator is configured to calculate a workload for each memory operation, based on the determined resource consumption, and
the user-unit workload calculator is configured to add the workload calculated by a unit of the memory operation to the workloads of the plurality of users, and
the memory operation processor is configured to perform a scheduling operation such that a memory operation in response to a command from a second user is executed at a point in time based on a workload of a first user becoming greater than a workload of the second user, during execution of memory operations in response to a command from the first user.

11. An operating method of a memory controller, the method comprising:
performing at least one memory operation included in a first command, the first command being issued by a first user and fetched from a host;
calculating a command-unit workload caused by the first command, based on resource consumption of a memory device, which is generated by performing each of the at least one memory operation;
calculating a user-unit workload of the first user by adding the command-unit workload caused by the first command to a current workload of the first user; and
preferentially fetching a command issued by a second user before a command issued by the first user in response to a workload of the first user being greater than a workload of the second user, based on a result of comparison of the workload of the first user with the workload of the second user.

12. The method of claim 11, wherein the resource consumption comprises at least one of required time for a memory operation, required power for the memory operation, and an occupancy time of a buffer provided inside or outside the memory controller in the memory operation.

13. The method of claim 11 or 12, further comprising:
calculating a command-unit workload caused by a second command from the second user, based on resource consumption that is determined by performing at least one memory operation included in the second command;
calculating a user-unit workload of the second user by adding a workload caused by the second command to a current workload of the second user; and
preferentially fetching the command issued by the first user before the command issued by the second user based on the workload of the second user being greater than the workload of the first user.

14. The method of claim 11, wherein
the resource consumption is calculated through an operation using a first value related to time required for a memory operation and a second value related to power required for the memory operation, and
the operation comprises a weight value operation of giving a weight value to at least one of the first value and the second value.

15. The method of claim 14, wherein the weight value given to the at least one of the first value and the second value is dynamically changed during an operation of a storage device adopting the memory controller.
